# NEUE EUROPÄISCHE PATENTSCHRIFT

(11) **EP 1 844 646 B2**
(45) Veröffentlichungstag und Bekanntmachung des Hinweises auf die Entscheidung über den Einspruch: **05.12.2012**
(45) Hinweis auf die Patenterteilung: 02.09.2009
(21) Anmeldenummer: 07006791.3
(22) Anmeldetag: 31.03.2007
(51) Int. Cl.: A01G 3/053

(54) **Heckenschere**
Hedge shears
Taille-haie

(30) Priorität: 10.04.2006 DE 102006018072
(43) Veröffentlichungstag der Anmeldung: 17.10.2007
(73) Patentinhaber: Andreas Stihl AG & Co. KG, 71336 Waiblingen (DE)
(72) Erfinder: Rosskamp, Heiko, Dr.-Ing., 73099 Adelberg (DE)
(74) Vertreter: Steil, Christian

(56) Entgegenhaltungen:
- EP-A- 0 374 600
- EP-A- 1 059 025
- EP-B1- 0 374 600
- WO-A-2006/010676
- DE- - 2 332 630
- DE-A1- 19 521 423
- DE-A1- 19 926 375
- DE-A1-102004 036 588
- DE-C2- 4 021 277
- DE-C2- 4 332 986
- DE-U1-202004 015 480
- DE-U1-202004 015 480
- US-A- 3 934 340
- US-A- 5 589 288
- US-B1- 6 181 032
- ROBERT BOSCH GMBH: 'Instruction manual for a hedge trimmer "Bosch AHS 3/4 Accu"' 01 Januar 2009, SWITZERLAND,
- 'Gardening Club Trim your hedges in comfort and safety' THE BIRMINGHAM POST 08 September 2001,
- BOSCH: 'Heckenschere AHS 3 - Exploded drawing' 31 Mai 1999,
- 'Offer from commercial website amazon.de of a hedge trimmer "Bosch Heckenschere AHS 3 Akku"' AMAZON.DE 26 Januar 2004,

## Beschreibung

Die vorliegende Erfindung betrifft eine Heckenschere gemäß dem Oberbegriff des Anspruches 1 (wie aus der Druckschrift EP 0374600 A1 bekannt), mit einem Gehäuse, an dem ein von dem Gehäuse entlang einer Längsachse nach vorne vorstehender Messerbalken, ein elektrischer Antriebsmotor zum Antreiben des Messerbalkens und wenigstens ein elektrischer Energiespeicher zum Versorgen des Antriebsmotors mit elektrischer Energie gelagert sind, mit einem oberhalb eines Schwerpunktes der Heckenschere angeordneten oberen Handgriff und mit einem hinter dem Heckenschere-Schwerpunkt angeordneten hinteren Handgriff.

Eine weitere Heckenschere ist bekannt aus dem Dokument DE-PS 1 223 443.

Heckenscheren dienen zum Stutzen von Hecken oder zum Zurückschneiden von Gebüsch oder feststängeligen Pflanzen. Motorbetriebene Heckenscheren werden entweder von einem Verbrennungsmotor angetrieben oder von einem Elektromotor. Elektromotorisch angetriebene Heckenscheren sind bislang üblicherweise netzgespeist, so dass die elektrische Energie über ein Kabel zugeführt wird. Dies schränkt die Handhabbarkeit solcher Heckenscheren ein und beinhaltet zudem ein Sicherheitsrisiko, da das Kabel versehentlich durchtrennt werden kann.

Heckenscheren mit elektromotorischem Antrieb und einem an dem Gehäuse der Heckenschere gelagerten elektrischen Energiespeicher sind ebenfalls seit Jahren bekannt. Bislang ist diese Art von Heckenschere problematisch hinsichtlich des Gesamtgewichtes, hinsichtlich der mit einer Ladung verfügbaren Arbeitszeit und hinsichtlich der Handhabbarkeit.

Aus diesen Gründen sind solche Heckenscheren bislang lediglich im Hobby-Bereich eingesetzt worden. In den letzten Jahren ist jedoch die Energiedichte von verfügbaren elektrischen Energiespeichern stark angestiegen, insbesondere bei Akkumulatoren auf Lithiumbasis oder dergleichen. Aus diesem Grund wird angestrebt, gattungsgemäße Heckenscheren auch im sogenannten Profi-Bereich einzusetzen.

Aus dem eingangs genannten Dokument DE-PS 1 223 443 ist eine Heckenschere bekannt, bei der ein rückwärtiger Teil des Gehäuses als Handgriff ausgebildet ist, der einen austauschbaren Batteriesatz aufnimmt.

Aus dem Dokument EP 0 599 550 P1 ist ebenfalls eine gattungsgemäße Heckenschere bekannt, bei der ein Sicherheitsverriegelungsmechanismus implementiert ist.

Die EP 0 374 600 B1 offenbart eine akkubetriebene Heckenschere, bei der der Energiespeicher unterhalb des hinteren Handgriffes angeordnet ist.

Diesen Geräten, wie auch den ansonsten auf dem Markt verfügbaren Geräten aus dem "Hobby-Bereich" ist gemeinsam, dass der Akkumulator an einem hinteren bzw. unteren Abschnitt des Gehäuses angeordnet ist.

Ferner zeigt die DE 199 26 375 A1 eine netzabhängige Heckenschere, deren hinterer Handgriff am Gehäuse verschwenkbar ausgebildet ist.

Das Dokument US 6,181,032 B1 offenbart ein Leistungssteuerungsmodul, das an unterschiedliche Gartengeräte ansetzbar ist. Das Leistungssteuerungsmodul weist ein Gehäuse auf, in dem ein Energiespeicher nicht auswechselbar aufgenommen ist. An dem Gehäuse des Leistungssteuermoduls ist hinter dem Energiespeicher ein Handgriff mit einem Betätigungsschalter vorgesehen. Das Leistungssteuermodul ist dabei in einer Variante von hinten an ein Heckenscherenmodul ansetzbar, das einen weiteren Handgriff sowie einen mittels des Energiespeichers betreibbaren Motor aufweist.

Ferner ist aus einem Dokument "Instruction Manual for a Hedge Trimmer, Bosch AHS 3/4 Akku" eine Heckenschere bekannt, bei der ein Energiespeicher seitlich außen an einem Gehäuse im axialen Bereich zwischen zwei Handgriffen anbringbar ist.

Vor dem obigen Hintergrund ist es eine Aufgabe der vorliegenden Erfindung, eine gattungsgemäße Heckenschere anzugeben, die eine gute Handhabbarkeit bietet.

Diese Aufgabe wird durch eine Heckenschere gemäß Anspruch 1 gelöst, wobei Energiespeicher an dem Gehäuse zumindest überwiegend vor dem hinteren Handgriff angeordnet ist.

Durch die Maßnahme kann erreicht werden, dass die Heckenschere insgesamt eine gute "Balance" besitzt. Daher ist ein ermüdungsfreier Betrieb auch über längere Zeit möglich.

Der hintere Handgriff kann zudem in weiten Grenzen beliebig ausgestaltet bzw. konstruiert werden.

In diesem Zusammenhang ist anzumerken, dass im Rahmen der vorliegenden Anmeldung eine Längsrichtung generell eine Richtung parallel zur Längsachse des Messerbalkens ist. Eine Seitenrichtung ist eine Richtung quer, insbesondere etwa senkrecht zur Längsrichtung, und zwar etwa in horizontaler Richtung. Eine Höhenrichtung ist ebenfalls eine Richtung etwa senkrecht zu der Längsrichtung, und zwar etwa in vertikaler Richtung.

Die Begriffe "vorne" und "hinten" beziehen sich generell auf die Längsrichtung, wobei "vorne" dort ist, wo der Messerbalken ist. Die Begriffe "oben" und "unten" beziehen sich auf die Höhenrichtung.

Diese Ortsangaben sollen jedoch nur einer vereinfachten Beschreibung der relativen Lage der Bauteile der erfindungsgemäßen Heckenschere zueinander dienen, und zwar in einer gewöhnlichen horizontalen Arbeitshaltung der Heckenschere. Die Begriffe sind darüber hinaus jedoch nicht einschränkend zu verstehen.

Die Aufgabe wird somit vollkommen gelöst.

Vorzugsweise ist der Energiespeicher an dem Gehäuse in Längsrichtung gesehen vor dem Antriebsmotor angeordnet.

Diese Ausgestaltung erlaubt es, insgesamt eine sehr gute Gewichtverteilung bzw. Balance zu erzielen.

Zur guten Anordnung des Messerbalkens an dem Gehäuse ist eine Kopplung zwischen dem Messerbalken und dem elektrischen Antriebsmotor innerhalb des Gehäuses in Längsrichtung gesehen häufig nach hinten versetzt. Daher wird bei der Anordnung des Energiespeichers vor dem Antriebsmotor zudem der zur Verfügung stehende Bauraum gut ausgenutzt.

Gemäß einer weiteren bevorzugten Ausführungsform ist der Energiespeicher an dem Gehäuse in Höhenrichtung gesehen überlappend mit dem Antriebsmotor angeordnet.

Auch hierbei wird eine gute Balance erzielt.

Vorzugsweise ist der Energiespeicher an dem Gehäuse zumindest teilweise oberhalb des Antriebsmotors angeordnet.

Dies ermöglicht ggf. eine leichtere Auswechselbarkeit des Energiespeichers.

Alternativ hierzu ist es möglich, den Energiespeicher an dem Gehäuse zumindest teilweise unterhalb des Antriebsmotors anzuordnen.

Gemäß einer weiteren bevorzugten Ausführungsform ist der Energiespeicher an dem Gehäuse in Seitenrichtung gesehen zumindest teilweise überlappend mit dem Antriebsmotor angeordnet.

Auch hierbei ist es möglich, eine gute Gewichtsverteilung und damit "Balance" zu erzielen. Ferner ist es möglich, das Gehäuse in Höhenrichtung kompakt auszubilden.

Von besonderem Vorteil ist es dabei, wenn der Energiespeicher an dem Gehäuse seitlich neben dem Antriebsmotor angeordnet ist.

Gemäß einer weiteren bevorzugten Ausführungsform ist der Energiespeicher an dem Gehäuse in Längsrichtung gesehen hinter dem Antriebsmotor angeordnet.

Auch hierbei lässt sich eine gute Gewichtsverteilung realisieren.

Insgesamt ist es ferner vorteilhaft, wenn der Energiespeicher zwei Abschnitte aufweist, die in Bezug auf den Antriebsmotor etwa symmetrisch angeordnet sind.

Bei dieser Ausführungsform kann der Energiespeicher zwar aus einem Stück sein, jedoch zwei Abschnitte wie beispielsweise Schenkel aufweisen, die sich etwa symmetrisch in Bezug auf den Antriebsmotor erstrecken. Es ist jedoch auch möglich, an dem Gehäuse zwei voneinander separate Energiespeicher zu lagern, die in Bezug auf den Antriebsmotor symmetrisch angeordnet sind.

Die Symmetrie kann sich dabei auf die Höhenrichtung beziehen. Besonders bevorzugt ist es zur Erzielung einer in Höhenrichtung kompakten Bauweise jedoch, wenn die zwei Abschnitte seitlich neben dem Antriebsmotor angeordnet sind.

Generell ist es auch möglich, die zwei Abschnitte nicht symmetrisch zu dem Antriebsmotor anzuordnen.

Gemäß einer weiteren insgesamt bevorzugten Ausführungsform ist der Energiespeicher an dem Gehäuse schräg in Bezug auf die Längsachse angeordnet.

Bei dieser Ausführungsform kann ebenfalls eine in Höhenrichtung kompakte Bauform erzielt werden.

Von besonderem Vorteil ist es aus dem gleichen Grund auch, wenn der Antriebsmotor eine Motorwelle aufweist, die schräg in Bezug auf die Längsachse angeordnet ist.

Unter "schräg" soll im vorliegenden Zusammenhang ein Winkel größer als 0° und kleiner als 90° verstanden werden, insbesondere ein Winkelbereich von 15 bis 80°.

Durch die schräge Anordnung des Antriebsmotors kann in Höhenrichtung eine kompakte Bauweise erzielt werden, wobei auch eine gute Balance erzielbar ist.

Generell ist es auch möglich, den Antriebsmotor parallel zu der Längsachse anzuordnen.

Von besonderem Vorteil ist es bei der schrägen oder parallelen Ausrichtung des Antriebsmotors, wenn die Motorwelle über ein Winkelgetriebe mit dem Messerbalken verbunden ist.

Insgesamt ist es vorteilhaft, wenn der Energiespeicher an dem Gehäuse in Längsrichtung gesehen insgesamt bzw. vollständig vor dem hinteren Handgriff angeordnet ist.

Bei dieser Ausführungsform kann auch bei einem vergleichsweise großen Akku mit einem relativ hohen Gewicht eine sehr gute Balance erzielt werden.

Ferner ist es vorteilhaft, wenn der Energiespeicher einen Energiespeicher-Schwerpunkt aufweist und wenn der Energiespeicher an dem Gehäuse so angeordnet ist, dass der Energiespeicher-Schwerpunkt in Längsrichtung gesehen hinter dem oberen Handgriff angeordnet ist.

Durch diese Maßnahme kann die Balance weiter verbessert werden.

Gemäß einer weiteren bevorzugten Ausführungsform ist der Energiespeicher an dem Gehäuse in Längsrichtung gesehen insgesamt hinter dem oberen Handgriff angeordnet.

Hierbei wird erreicht, dass das Gewicht des Energiespeichers in Bezug auf den oberen Handgriff einen Beitrag zu einem Gegengewicht zu dem Messerbalken liefert.

Es ist erfindungsgemäß vorgesehen, dass der Energiespeicher einen Energiespeicher-Schwerpunkt aufweist und dass der Energiespeicher an dem Gehäuse in Seitenrichtung gesehen so angeordnet ist, dass der Energiespeicher-Schwerpunkt von einer Schwerpunkt-Längsachse, die durch den Heckenscheren-Schwerpunkt verläuft, einen Abstand von nicht mehr als 20 % der Gesamtbreite des Gehäuses aufweist.

Durch diese Maßnahme wird erreicht, dass der Akkumulator einen Beitrag zu einer guten Balance auch in Seitenrichtung der Heckenschere liefert.

Erfindungsgemäß ist der Energiespeicher auswechselbar, wobei das Gehäuse wenigstens eine mechanische und/oder elektrische Schnittstelle für wenigstens einen Energiespeicher aufweist.

Zwar ist es auch denkbar, einen Energiespeicher vollständig in das Gehäuse zu integrieren und außen an dem Gehäuse lediglich eine Schnittstelle zum Laden des Energiespeichers vorzusehen. Die Auswechselbarkeit des Energiespeichers gewährleistet jedoch, dass die Heckenschere mittels mehrerer Energiespeicher auch über längere Zeiträume betreibbar ist.

Von besonderem Vorteil ist erfindungsgemäß es dabei, dass die Schnittstelle an dem Gehäuse von oben zugänglich ist, so dass ein Energiespeicher im Wesentlichen von oben mit der Schnittstelle verbindbar ist.

Hierbei wird erreicht, dass der Akkumulator leicht eingesetzt und entnommen werden kann.

Auch ist es erfindungsgemäß möglich, dass die Schnittstelle an dem Gehäuse von vorne, insbesondere von schräg vorne, oder von der Seite aus zugänglich ist, so dass ein Energiespeicher im Wesentlichen von vorne, insbesondere von schräg vorne, oder von der Seite mit der Schnittstelle verbindbar ist.

Auch hierbei ist eine leichte Einsetzbarkeit und Entnehmbarkeit des Energiespeichers gewährleistet.

Erfindungsgemäß weist das Gehäuse zur Aufnahme des Energiespeichers ein Aufnahmefach auf, in dem die Schnittstelle angeordnet ist.

Hierbei bildet der Energiespeicher im eingesetzten Zustand weniger Störkonturen und wird vollständig in dem Aufnahmefach aufgenommen. Zudem kann die Schnittstelle besser vor Umweltbelastungen geschützt werden, wenn sie innerhalb des Aufnahmefachs angeordnet ist.

Eine vorteilhafte Ausführungsform besteht ferner darin, dass der obere Handgriff über wenigstens einen zu dem oberen Handgriff abgewinkelten Griffsteg mit dem Gehäuse verbunden ist, wobei der Griffsteg an dem Gehäuse an einem Bereich unterhalb des Heckenscheren-Schwerpunktes angreift.

Durch diese Maßnahme ist es auch möglich, die Lage des oberen Handgriffes in Längsrichtung gesehen in optimaler Weise an die Lage der anderen Bestandteile der Heckenschere anzupassen, insbesondere um eine gute Balance zu erzielen. Ferner ermöglicht dies eine gute Handhabbarkeit, so dass die Heckenschere auch einmal von der Seite, das heißt am Griffsteg, ergriffen werden kann.

Es ist ebenfalls vorteilhaft, wenn eine Griffachse des hinteren Handgriffes im Bereich von -30° bis +30°, insbesondere von -20° bis +20°, in Bezug auf die Längsachse ausgerichtet ist.

Obgleich generell denkbar ist, dass die Griffachse in seitlicher Richtung gegenüber der Längsachse versetzt ist, ist es bevorzugt, wenn die Griffachse innerhalb dieses Winkelbereiches in Höhenrichtung gegenüber der Längsachse fest abgewinkelt oder verschwenkbar ist.

Insgesamt kann bei einer Anordnung der Griffachse innerhalb des Winkelbereiches eine gute Handhabbarkeit erzielt werden.

Vorzugsweise ist der hintere Handgriff an dem Gehäuse um eine Schwenkachse verschwenkbar gelagert, die quer zur Längsachse ausgerichtet ist.

Bei dieser Ausführungsform kann die Heckenschere an die bevorzugte Handhaltung einer Bedienperson in optimaler Weise angepasst werden.

Die Schwenkachse verläuft dabei vorzugsweise in Seitenrichtung.

Gemäß einer weiteren bevorzugten Ausführungsform ist der hintere Handgriff an dem Gehäuse um eine Achse verdrehbar gelagert, die im Wesentlichen parallel zu der Längsachse oder der zugehörigen Griffachse ausgerichtet ist.

Bei dieser Ausführungsform kann eine ergonomische Haltung der Heckenschere auch beim Führen der Heckenschere in einer vertikalen Ebene erreicht werden. Es ist generell ein ermüdungsfreieres Arbeiten möglich. Die Drehachse kann parallel zu der Längsachse ausgerichtet sein. Die Drehachse kann jedoch auch im Bereich von bis zu etwa ± 20° gegenüber der Längsachse abgewinkelt sein.

Die Verdrehbarkeit kann beispielsweise von -90° bis +90° gegenüber der Höhenrichtung möglich sein. Es ist jedoch auch ein größerer oder ein eingeschränkterer Winkelbereich zu dieser Drehbarkeit denkbar.

Eine Verdrehbarkeit bzw. eine Verschwenkbarkeit des hinteren Handgriffes lassen sich zudem konstruktiv einfach realisieren, wenn der Energiespeicher insgesamt vor dem hinteren Handgriff angeordnet ist.

Bevorzugt ist es insgesamt auch, wenn der Antriebsmotor und der Energiespeicher an dem Gehäuse so angeordnet sind, dass die Heckenschere, wenn sie an dem oberen Handgriff frei gehalten ist, eine Gleichgewichtslage einnimmt, bei der die Längsachse mit der Horizontalen einen Gleichgewichtswinkel α im Bereich von -30° ≤ α ≤ +30° einschließt.

Hierdurch wird vermieden, dass dann, wenn eine Person den hinteren Handgriff loslässt und die Heckenschere folglich nur noch am oberen Handgriff gehalten ist, der Messerbalken noch oben oder unten ausschlägt. Dies könnte sogar zu einem Sicherheitsrisiko führen, wenn nämlich der Messerbalken nach Loslassen des hinteren Handgriffes noch nachläuft.

Hierbei ist anzumerken, dass die erfindungsgemäße Heckenschere vorzugsweise sowohl an dem oberen als auch an dem hinteren Handgriff ein Betätigungsmittel aufweist, wobei die Heckenschere nur dann in Betrieb genommen wird, wenn beide Betätigungsmittel betätigt sind.

Vorzugsweise ist der Schwerpunkt des Energiespeichers oberhalb des Messerbalkens angeordnet.

Dies ermöglicht es, dass eine Unterseite des Gehäuses etwa fluchtend mit dem Messerbalken ausgebildet werden kann, so dass das Gehäuse bzw. der Energiespeicher beim bestimmungsgemäßen Betrieb der Heckenschere keine Störkontur bildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische, am Gehäuse teilweise weggeschnittene Ansicht einer Ausführungsform einer erfindungsgemäßen Heckenschere von schräg hinten;
- Figur 2: eine schematische Seitenansicht von erfindungsgemäßen Heckenscheren in unterschiedlichen Gleichgewichtslagen;
- Figur 3: eine schematische Seitenansicht einer weiteren Ausführungsform einer erfindungsgemäßen Heckenschere;
- Figur 4: eine schematische Seitenansicht einer weiteren Ausführungsform einer erfindungsgemäßen Heckenschere;
- Figur 5: eine schematische Draufsicht auf eine weitere Ausführungsform einer erfindungsgemäßen Heckenschere;
- Figur 6: eine schematische Ansicht einer weiteren Ausführungsform einer erfindungsgemäßen Heckenschere von unten;
- Figur 7: eine schematische Ansicht einer weiteren Ausführungsform einer erfindungsgemäßen Heckenschere von unten; und
- Figur 8: eine schematische Seitenansicht einer weiteren Ausführungsform einer erfindungsgemäßen Heckenschere.

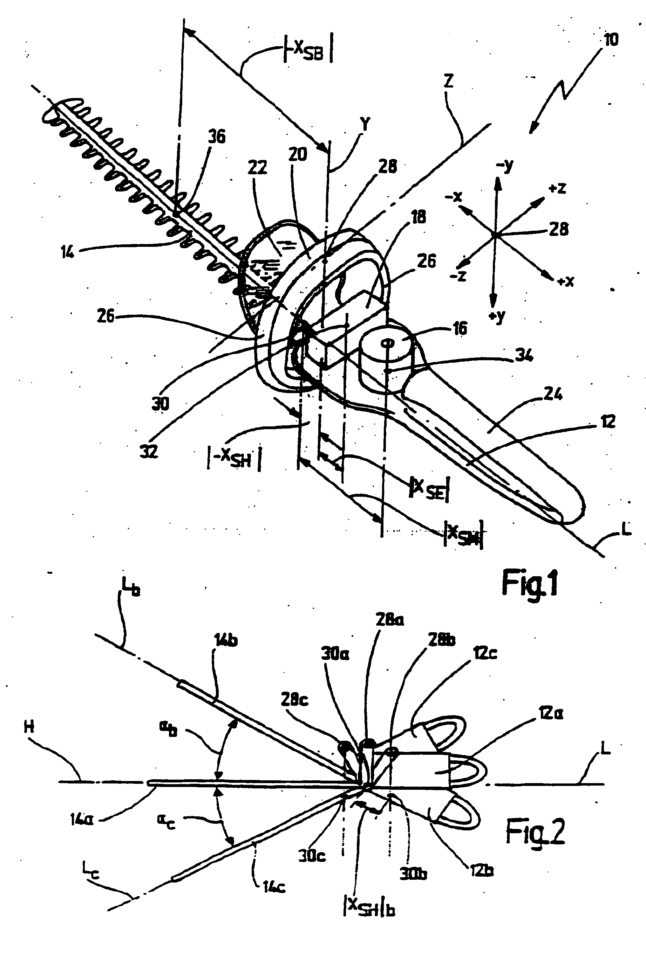

In Figur 1 ist eine erste Ausführungsform einer erfindungsgemäßen Heckenschere generell mit 10 bezeichnet.

Die Heckenschere 10 weist ein sich generell entlang einer Längsachse L erstreckendes Gehäuse 12 auf. An dem Gehäuse 12 ist ein Messerbalken 14 gelagert, der sich entlang der Längsachse L erstreckt. An dem Gehäuse 12 sind ferner ein elektrischer Antriebsmotor 16 sowie ein elektrischer Energiespeicher 18 in Form eines aufladbaren Akkumulators angeordnet.

Der Energiespeicher 18 weist Zellen mit einer hohen Energiedichte von beispielsweise wenigstens 100 Wh/kg auf. Der Energiespeicher 18 kann auf Lithium-Basis ausgebildet sein, beispielsweise als Lithium-Ionen-Akku, als Lithium-Polymer-Akku, etc., oder auf anderer bzw. vergleichbarer Basis. Ferner versteht sich, dass der Energiespeicher aus einer Mehrzahl von Zellen bestehen kann, deren Einzelspannungen aufgrund serieller Beschaltung addiert werden. Auch eine Parallelschaltung solcher Einzelzellen ist möglich. Ferner beinhaltet der Energiespeicher 18 vorzugsweise eine interne Sicherheitsschaltung, die den Energiespeicher beispielsweise vor einer Tiefentladung oder Überladung abschaltet. Auch kann eine Ladeelektronik in der Sicherheitsschaltung enthalten sein.

An dem Gehäuse 12 sind ferner ein oberer Handgriff 20 sowie ein Schutzschild 22 festgelegt. Das Schutzschild 22 ist schräg vor dem oberen Handgriff 20 angeordnet und dient dazu, die den oberen Handgriff 20 haltende Hand vor Ästen oder Ähnlichem zu schützen.

An dem Gehäuse 12 ist ferner ein hinterer Handgriff vorgesehen. Der hintere Handgriff ist etwa parallel zu der Längsachse L ausgerichtet, wohingegen der obere Handgriff 20 quer hierzu ausgerichtet ist. Der obere Handgriff 20 ist über einen linken und einen rechten seitlichen Griffsteg 26 mit dem Gehäuse 12 verbunden, und zwar im Bereich von unteren Enden der Griffstege 26.

Zur Erläuterung der relativen Lage der oben beschriebenen Elemente dient ein Koordinatensystem, das in Figur 1 eingezeichnet ist und nachfolgend wie folgt verwendet wird. In dem Koordinatensystem ist eine x-Achse generell parallel zu der Längsachse L ausgerichtet. Eine y-Achse ist senkrecht zu der x-Achse in Höhenrichtung ausgerichtet, erstreckt sich also bei horizontaler Anordnung der x-Achse in vertikaler Richtung. Die z-Achse ist in Seitenrichtung ausgerichtet, erstreckt sich also nach links bzw. rechts in Bezug auf die x-Achse. Ferner wird angenommen, dass der Messerbalken 14 vorne und der hintere Handgriff 24 hinten angeordnet sind, wobei dies nur eine Definition ist und nicht einschränkend verstanden werden soll.

Der Ursprung des oben beschriebenen Koordinatensystems wird im vorliegenden Ausführungsbeispiel in einen Aufhängepunkt 28 am oberen Handgriff 20 gelegt. Positive x-Werte erstrecken sich ausgehend hiervon nach hinten. Positive y-Werte erstrecken sich ausgehend hiervon nach unten.

Die Heckenschere 10 der Figur 1 weist insgesamt einen Schwerpunkt auf, der in Figur 1 mit 30 bezeichnet ist. Der Schwerpunkt 30 liegt im dargestellten Fall vor dem Ursprung 28 des Koordinatensystems, bei -x_{SH}. Hieraus ergibt sich, dass die Heckenschere 10, dann, wenn sie an dem oberen Handgriff frei gehalten wird, sich mit dem Messerbalken 14 etwas nach unten neigt. In der Gleichgewichtslage liegt der Schwerpunkt 30 dann unterhalb des Aufhängungspunktes 28 (=Ursprung Koordinatensystem) des oberen Handgriffes 20. Dies ist in Figur 2 für drei unterschiedliche Auslegungen der Heckenschere 10 dargestellt. Sofern der Schwerpunkt 30a bei horizontaler Ausrichtung der Heckenschere 10 unmittelbar unterhalb des Aufhängepunktes 28a liegt, ergibt sich eine horizontale Gleichgewichtslage. Sofern der Schwerpunkt 30b hinter dem Aufhängepunkt 28b liegt, ergibt sich eine schräg nach oben weisende Gleichgewichtslage, wobei sich ein Gleichgewichtswinkel α_{b} zwischen der Längsachse L_{b} und der Horizontalen H einstellt. Sofern der Schwerpunkt 30c vor dem Aufhängepunkt 28c liegt, ergibt sich eine Gleichgewichtslage, bei der der Messerbalken 14c nach unten geneigt ist und mit der Horizontalen H einen Gleichgewichtswinkel α_{c} einnimmt.

Unter erneuter Bezugnahme auf Figur 1 sind der elektrische Antriebsmotor 16 und der elektrische Energiespeicher 18 an dem Gehäuse 12 so angeordnet, dass die Heckenschere, wenn sie an dem Aufhängepunkt 28 gehalten ist, eine Gleichgewichtslage einnimmt, bei der der Gleichgewichtswinkel α im Bereich von -30° ≤ α ≤ +30° liegt. In Figur 2 sind jeweils die Grenzwinkel gezeigt.

Der elektrische Energiespeicher weist einen Schwerpunkt 32 auf. Der elektrische Antriebsmotor 16 weist einen Schwerpunkt 34 auf, und der Messerbalken 14 weist einen Schwerpunkt 36 auf.

Die nachfolgende Angabe von relativen Lagen der einzelnen Elemente zueinander soll sich generell auf die Lage des jeweiligen Schwerpunktes beziehen, sofern nichts anderes erwähnt ist.

Bei der Heckenschere 10 der Figur 1 wird eine stabile Gleichgewichtslage dadurch erreicht, dass der Energiespeicher 18 vor dem Antriebsmotor 16 angeordnet ist, das heißt x_{SE} < x_{SM}, wobei sich SE auf den Schwerpunkt des Energiespeichers bezieht und wobei sich SM auf den Schwerpunkt des Motors bezieht.

Man erkennt in der Darstellung der Figur 1 ferner, dass der Schwerpunkt 30 vor dem Aufhängepunkt 28 liegt, da x_{SH} (SH steht für Schwerpunkt Heckenschere) im negativen x-Bereich liegt.

Sowohl der Antriebsmotor 16 als auch der Energiespeicher 18 liegen vor dem hinteren Handgriff 24. Ferner liegen bei der Ausführungsform der Figur 1 der Energiespeicher 18 und der Antriebsmotor 16 hinter dem Aufhängepunkt 28. Der Schwerpunkt 32 des Energiespeichers 18 liegt oberhalb des Messerbalkens 14. Genauer gesagt liegt der Energiespeicher 18 vollständig oberhalb des Messerbalkens 14 (bezogen auf eine horizontale Ausrichtung der Heckenschere).

Im Folgenden werden weitere Ausführungsformen von erfindungsgemäßen Heckenscheren beschrieben, deren genereller Aufbau und deren generelle Funktionsweise der Heckenschere 10 der Figur 1 entsprechen. Gleiche oder einander entsprechende Elemente sind daher mit den gleichen Bezugsziffern versehen. Ferner soll die obige Beschreibung generell in gleicher Weise auf die nachfolgenden Ausführungsformen anwendbar sein, so dass im Folgenden lediglich auf Unterschiede eingegangen wird.

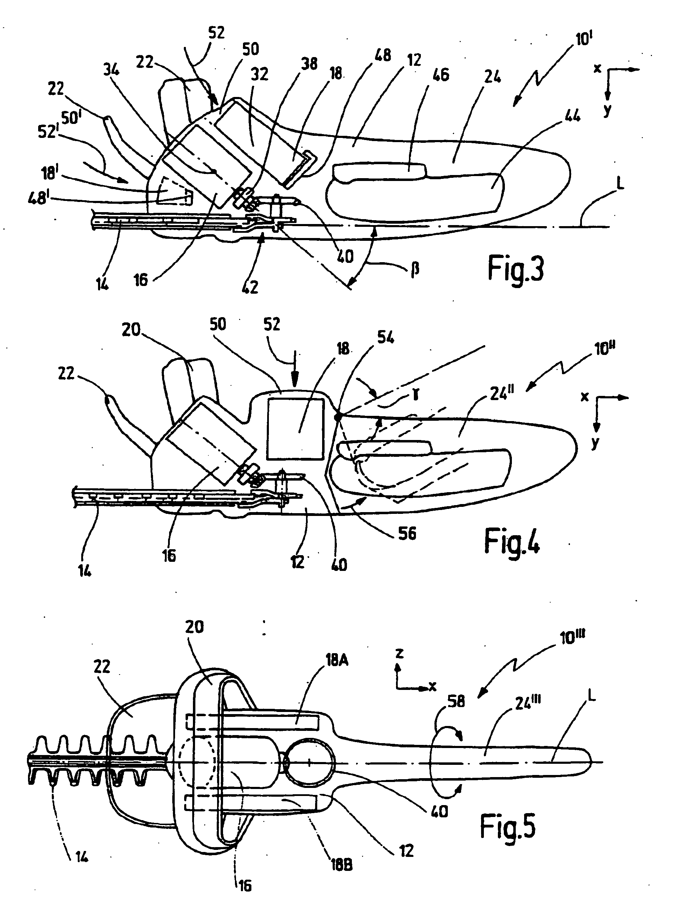

In Figur 3 ist eine alternative Ausführungsform einer erfindungsgemäßen Heckenschere generell mit 10' bezeichnet. Die Heckenschere 10' ist dazu konstruiert, dass das Gehäuse 12 in Höhenrichtung y generell flach baut.

Dabei ist es vorgesehen, dass der Antriebsmotor 16 schräg zu der Längsachse L ausgerichtet ist. Genauer gesagt weist der Antriebsmotor 16 eine Motorwelle 38 auf, die mit der Längsachse L einen Motorwellenwinkel β einschließt. β liegt generell im Bereich von 0° < β < 90°, vorzugsweise im Bereich von 5° ≤ β ≤ 80°, und insbesondere in einem Bereich 0 < β ≤ 50°.

Ein Ende der Motorwelle 38 ist mit einem Winkelgetriebe 40 gekoppelt, das mit einem Exzentertrieb 42 zum Antrieb des Messerbalkens 14 verbunden ist.

Durch die Schrägstellung des elektrischen Antriebsmotors 16 wird erreicht, dass das Gehäuse 12 in Höhenrichtung y kleiner bauen kann.

In Figur 3 ist ferner gezeigt, dass das Gehäuse 12 in einem hinteren Bereich eine Öffnung 44 aufweist, wobei der hintere Handgriff 24 oberhalb der Öffnung 44 ausgebildet ist. Eine den hinteren Handgriff 24 umschließende Hand greift folglich in die Gehäuseöffnung 44. An dem Innenumfang des Gehäuses 44 ist ein Bedienmittel in Form eines Schalters 46 angeordnet.

Das Gehäuse 12 weist ferner ein Aufnahmefach 50 für einen Energiespeicher 18 auf, wobei am Boden des Aufnahmefaches 50 eine elektrische Schnittstelle 48 zur elektrischen Verbindung des Energiespeichers 18 mit einer in dem Gehäuse 12 angeordneten Steuerelektronik (nicht dargestellt) vorgesehen ist.

Die Schnittstelle 48 kann auch mechanische Schnittstellenkomponenten enthalten, wie beispielsweise Rastkomponenten.

Das Aufnahmefach 50 ist dabei an dem Gehäuse so vorgesehen, dass der Energiespeicher 18 schräg zu der Längsachse L ausgerichtet und schräg oberhalb des Antriebsmotors 16 angeordnet ist. Mit anderen Worten ist der Schwerpunkt 32 des Energiespeichers 18 hinter dem Schwerpunkt 36 des Antriebsmotors 16 angeordnet, jedoch höher als dieser. In der Projektion überdecken sich die Gehäuse von Antriebsmotor 16 und Energiespeicher 18 sowohl in Höhenrichtung y als auch in Längsrichtung x.

Das Aufnahmefach 50 weist in einem oberen Bereich des Gehäuses 12 eine Öffnung auf, über die der Energiespeicher 18 eingeführt werden kann. Die Einführrichtung ist bei 52 gezeigt.

In Figur 3 ist ferner ein Energiespeicher 18' gezeigt, der schräg unterhalb des Antriebsmotors 16 angeordnet ist. Der Energiespeicher 18' kann alternativ oder zusätzlich zu dem Energiespeicher 18 vorgesehen sein. Für den Energiespeicher 18' kann vorteilhafterweise ein entsprechendes Aufnahmefach 50' vorgesehen sein, mit einer Schnittstelle 48'. Dabei ist die Schnittstelle 48' von vorne zugänglich, wie es durch einen Pfeil 52' gezeigt ist.

In Figur 4 ist eine weitere alternative Ausführungsform einer erfindungsgemäßen Heckenschere generell mit 10" bezeichnet.

Bei der Heckenschere 10" ist der Antriebsmotor 16 ebenfalls schräg angeordnet, wie bei der Heckenschere 10' der Figur 3. Der Akkumulator 18 ist jedoch vollständig hinter dem Antriebsmotor 16 angeordnet und ist beispielsweise in Höhenrichtung y ausgerichtet. In entsprechender Weise ist das Aufnahmefach 50 in Höhenrichtung y ausgerichtet und ein Energiespeicher 18 wird in das Aufnahmefach 50 in Höhenrichtung y (Pfeil 52) eingeführt.

Im Übrigen entspricht der Aufbau der Heckenschere 10" jenem der Heckenschere 10'.

Zusätzlich hierzu ist jedoch vorgesehen, dass der hintere Handgriff 24" gegenüber dem Gehäuse 12 verschwenkt (fest abgewinkelt) oder verschwenkbar ist, und zwar um eine Schwenkachse 54, die in Seitenrichtung z ausgerichtet ist. Die Verschwenkrichtung ist bei 56 gezeigt. Der Verschwenkwinkel ist mit γ bezeichnet.

Generell ist es möglich, den hinteren Handgriff 24 in einem Bereich von -30° ≤ γ ≤ 30°, insbesondere von -20° bis +20° oder von 0° bis +30°, zu verschwenken, und zwar in Bezug auf die Längsrichtung x.

In Figur 5 ist eine weitere alternative Ausführungsform einer erfindungsgemäßen Heckenschere generell mit 10''' bezeichnet.

Bei der Heckenschere 10''' ist der Antriebsmotor 16 angeordnet wie bei den Heckenscheren 10' und 10". Der Energiespeicher weist bei der Heckenschere 10''' jedoch zwei Abschnitte 18A, 18B auf, die in Seitenrichtung z auf gegenüberliegenden Seiten des Antriebsmotors 16 angeordnet sind. Die Energiespeicherabschnitte 18A, 18B sind dabei vorzugsweise symmetrisch in Bezug auf den Antriebsmotor 16 angeordnet. Die Energiespeicherabschnitte 18A, 18B können Teil eines einzigen Energiespeichers sein, der beispielsweise eine U-Form hat. In diesem Fall würden die U-Schenkel die Energiespeicherabschnitte 18A, 18B bilden.

Es ist jedoch auch möglich, dass die Energiespeicherabschnitte 18A, 18B jeweils durch einen eigenen Energiespeicher (beispielsweise jeweils in Form eines Akkumulators mit eigener Sicherheitsschaltung) ausgebildet sind.

In Figur 5 ist bei 58 dargestellt, dass es möglich ist, dass der hintere Handgriff 24''' an dem Gehäuse 12 um eine Achse verdrehbar gelagert ist, die parallel zu der Längsachse L oder der Griffachse des hinteren Handgriffes (die ggf. verschwenkt ist) ausgerichtet ist.

Dabei kann entweder der gesamte hintere Handgriff 24''' um die Achse verdrehbar sein, oder es kann nur der Abschnitt des hinteren Handgriffes 24"' verdrehbar sein, der von der Hand tatsächlich umgriffen wird.

Durch die Verdrehbarkeit des hinteren Handgriffes 24''' ist insbesondere ein Arbeiten über Kopf bzw. in einer senkrechten Ausrichtung der Heckenschere vereinfacht.

Generell ist anzumerken, dass durch die Anordnung des Energiespeichers 18 vor dem hinteren Handgriff 24 ein großer Freiheitsgrad hinsichtlich der Ausgestaltung und Konstruktion des hinteren Handgriffes 24 möglich ist. Dies gilt sowohl für die Verdrehbarkeit als auch für die evtl. Verschwenkbarkeit des hinteren Handgriffes 24.

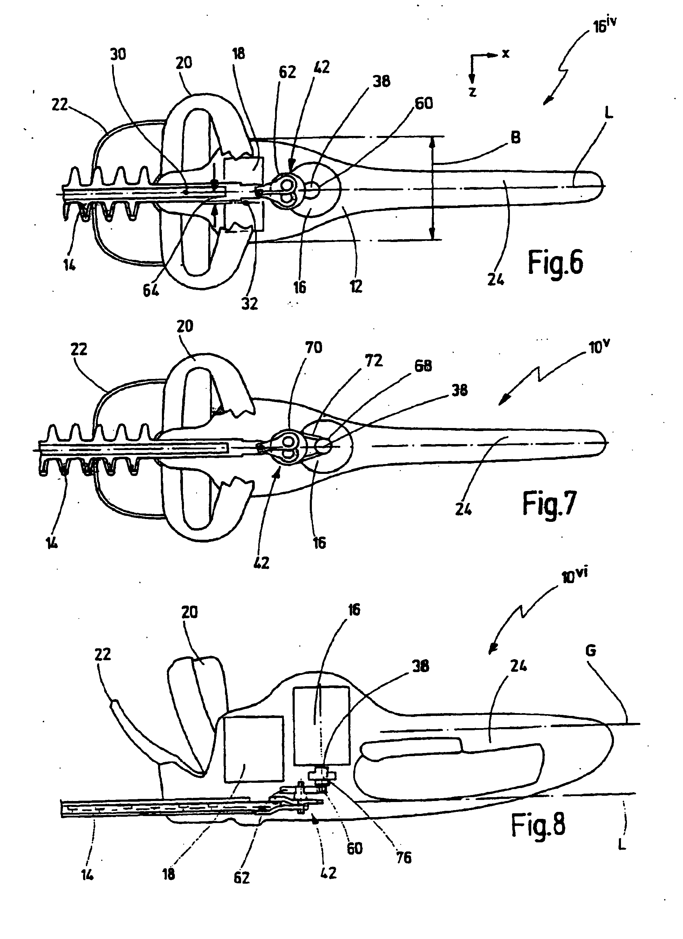

In Figur 6 ist eine weitere alternative Ausführungsform einer erfindungsgemäßen Heckenschere generell mit 10^{IV} bezeichnet.

In Figur 6 ist der Exzentertrieb 42 zum Antrieb des Messerbalkens 14 in größerer Genauigkeit dargestellt. Man erkennt, dass der Exzentertrieb ein Zahnrad 62 aufweist, das von einem Ritzel 60 angetrieben ist. Das Ritzel 60 kann beispielsweise an der Motorwelle 38 des Antriebsmotors 16 festgelegt sein. Das Ritzel 60 kann jedoch auch Teil des Winkelgetriebes 40 sein, wie es in den Figuren 3 und 4 dargestellt ist.

Durch die Kombination des Ritzels 60 und des Zahnrades 62 lässt sich eine Untersetzung einrichten, so dass der Antriebsmotor 16 mit relativ hohen Drehzahlen betrieben werden kann. Hierdurch kann der Antriebsmotor 16 insgesamt kompakt ausgebildet werden.

In Figur 6 ist ferner ein Energiespeicher 18 gezeigt, der in Längsrichtung x gesehen vor dem Antriebsmotor 16 angeordnet ist.

In Figur 6 ist ferner der Schwerpunkt 32 des Energiespeichers 18 dargestellt. Der Schwerpunkt 32 ist um einen Abstand 64 seitlich von der Längsachse L der Heckenschere 10 beabstandet, wobei die Längsachse L durch den Schwerpunkt 30 der Heckenschere 10 verläuft.

Der Wert des Abstandes 64 ist kleiner als 20 % der Gesamtbreite B des Gehäuses 12 der Heckenschere 10^{IV}, so dass auch in seitlicher Richtung eine gute Balance erzielbar ist.

In Figur 7 ist eine weitere alternative Ausführungsform einer erfindungsgemäßen Heckenschere generell mit 10^{V} bezeichnet.

Die Heckenschere 10^{V} entspricht der Heckenschere 10^{IV} der Figur 6, wobei an Stelle des Ritzels 60 und des Zahnrades 62 ein Riementrieb vorgesehen ist, mit einer ersten Riemenscheibe 68, die mit der Motorwelle 38 des Antriebsmotors 16 gekoppelt ist. Der Riementrieb weist ferner eine zweite Riemenscheibe 70 auf, die mit dem Exzentertrieb 42 gekoppelt ist. Ein entsprechender Riemen ist bei 72 dargestellt. Auch mit dem Riementrieb 68, 70,72 lässt eine Untersetzung erzielen. Es versteht sich, dass die erste Riemenscheibe 68 an Stelle mit der Motorwelle 38 auch mit dem Winkelgetriebe 40 verbunden sein kann.

In Figur 8 ist eine weitere alternative Ausführungsform einer erfindungsgemäßen Heckenschere generell mit 10^{VI} bezeichnet.

In Figur 8 ist gezeigt, dass die Motorwelle 38 des elektrischen Antriebsmotors 16 nicht unmittelbar mit dem Ritzel 60 verbunden ist. Im Falle der Heckenschere 10^{VI} ist vielmehr zwischen der Motorwelle 38 und dem Ritzel 60 (oder der ersten Riemenscheibe 68) eine Rutschkupplung 76 angeordnet. Die Rutschkupplung 76 dient dazu, einen überhöhten Motorstrom zu vermeiden, wenn der Messerbalken 14 schlagartig blockiert, beispielsweise bei Eingreifen an einem zu dicken oder verholzten Ast.

Bei der Heckenschere 10^{VI} ist der Energiespeicher 18, wie bei der Heckenschere 10 der Figur 1, vor dem Antriebsmotor 16 angeordnet.

In Figur 8 ist ferner gezeigt, dass der hintere Handgriff 24 in einer Griffachse G ausgerichtet ist. Die Griffachse G verläuft etwa parallel zu der Längsachse L oder spitzwinklig hierzu, wobei die Griffachse G und die Längsachse L einen Griffwinkel (vergleichbar dem Griffwinkel γ der Figur 4) einschließen, der im Bereich von -30° ≤ γ ≤ +30° liegen kann. In der dargestellten Ausführungsform ist der Winkel γ deutlich kleiner als 5°.

Es versteht sich, dass die verschiedenen Abwandlungen, die bei den unterschiedlichen Ausführungsformen von Heckenscheren in den Figuren 3 bis 8 gezeigt sind, in beliebiger Kombination untereinander verwendet werden können. Die Darstellung einzelner Merkmale in Bezug auf eine der Ausführungsformen soll keinesfalls beschränkend in Bezug auf die anderen Ausführungsformen wirken. Auch diese können jeweils mit den in nur einer anderen Ausführungsform gezeigten Merkmalen ausgestattet sein.

## Patentansprüche

1. Heckenschere (10) mit einem Gehäuse (12), an dem ein von dem Gehäuse (12) entlang einer Längsachse (L) nach vorne vorstehender Messerbalken (14), ein elektrischer Antriebsmotor (16) zum Antreiben des Messerbalkens (14) und wenigstens ein elektrischer Energiespeicher (18) zum Versorgen des Antriebsmotors (16) mit elektrischer Energie gelagert sind, mit einem oberhalb eines Schwerpunktes (30) der Heckenschere angeordneten oberen Handgriff (20) und mit einem hinter dem Heckenscheren-Schwerpunkt (30) angeordneten hinteren Handgriff (24), wobei der Energiespeicher (18) an dem Gehäuse (12) zumindest überwiegend vor dem hinteren Handgriff (24) angeordnet ist, und wobei der Energiespeicher (18) auswechselbar ist und dass das Gehäuse (12) wenigstens eine mechanische und/oder elektrische Schnittstelle (48) für wenigstens einen Energiespeicher aufweist, der einen Energiespeicher-Schwerpunkt (32) aufweist,
**dadurch gekennzeichnet, dass**
die Schnittstelle (48) an dem Gehäuse (12) von oben oder von vorne oder von der Seite zugänglich ist, so dass ein Energiespeicher (18) im Wesentlichen von oben oder von vorne oder von der Seite mit der Schnittstelle (48) verbindbar ist, wobei der Energiespeicher (18) an dem Gehäuse (12) in Seitenrichtung (z) gesehen so angeordnet ist, dass der Energiespeicher-Schwerpunkt (32) von einer Schwerpunkt-Längsachse (L), die durch den Heckenscheren-Schwerpunkt (30) verläuft, einen Abstand (64) von nicht mehr als 20 % der Gesamtbreite (B) des Gehäuses (12) aufweist, und wobei das Gehäuse (12) zur Aufnahme des Energiespeichers (18) ein Aufnahmefach (50) aufweist, in dem die Schnittstelle (48) angeordnet ist und in dem der Energiespeicher (18) im eingesetzten Zustand vollständig aufgenommen ist, derart, dass der Energiespeicher im eingesetzten Zustand wenig Störkonturen bildet.

2. Heckenschere nach Anspruch 1, **dadurch gekennzeichnet, dass** der Energiespeicher (18) an dem Gehäuse (12) in Längsrichtung (x) gesehen vor dem Antriebsmotor (16) angeordnet ist.

3. Heckenschere nach einem der Ansprüche 1 oder 2, **dadurch gekennzeichnet, dass** der Energiespeicher (18) an dem Gehäuse (12) in Höhenrichtung (y) gesehen überlappend mit dem Antriebsmotor (16) angeordnet ist.

4. Heckenschere nach Anspruch 3, **dadurch gekennzeichnet, dass** der Energiespeicher (18) an dem Gehäuse (12) zumindest teilweise oberhalb des Antriebsmotors (16) angeordnet ist.

5. Heckenschere nach Anspruch 3, **dadurch gekennzeichnet, dass** der Energiespeicher (18) an dem Gehäuse (12) zumindest teilweise unterhalb des Antriebsmotors (16) angeordnet ist.

6. Heckenschere nach einem der Ansprüche 1 oder 2, **dadurch gekennzeichnet, dass** der Energiespeicher (18A, 18B) an dem Gehäuse (12) in Seitenrichtung (z) gesehen zumindest teilweise überlappend mit dem Antriebsmotor (16) angeordnet ist

7. Heckenschere nach Anspruch 6, **dadurch gekennzeichnet, dass** der Energiespeicher (18A, 18B) an dem Gehäuse (12) seitlich neben dem Antriebsmotor (16) angeordnet ist.

8. Heckenschere nach Anspruch 1, **dadurch gekennzeichnet, dass** der Energiespeicher (18) an dem Gehäuse (12) in Längsrichtung (x) gesehen hinter dem Antriebsmotor (16) angeordnet ist.

9. Heckenschere nach einem der Ansprüche 1 bis 8, **dadurch gekennzeichnet, dass** der Energiespeicher (18) zwei Abschnitte (18A, 18B) aufweist, die in Bezug auf den Antriebsmotor (16) etwa symmetrisch angeordnet sind.

10. Heckenschere nach einem der Ansprüche 1 bis 9, **dadurch gekennzeichnet, dass** der Energiespeicher (18) an dem Gehäuse (12) schräg in Bezug auf die Längsachse (L) angeordnet ist.

11. Heckenschere nach einem der Ansprüche 1 bis 10, **dadurch gekennzeichnet, dass** der Antriebsmotor (16) eine Motorwelle (38) aufweist, die schräg in Bezug auf die Längsachse (L) angeordnet ist.

12. Heckenschere nach Anspruch 11, **dadurch gekennzeichnet, dass** die Motorwelle (38) über ein Winkelgetriebe (40) mit dem Messerbalken (14) verbunden ist.

13. Heckenschere nach einem der Ansprüche 1 bis 12, **dadurch gekennzeichnet, dass** der Energiespeicher (18) an dem Gehäuse (12) in Längsrichtung (x) gesehen insgesamt vor dem hinteren Handgriff (24) angeordnet ist.

14. Heckenschere nach einem der Ansprüche 1 bis 13, **dadurch gekennzeichnet, dass** der Energiespeicher (18) einen Energiespeicher-Schwerpunkt (32) aufweist und dass der Energiespeicher (18) an dem Gehäuse (12) so angeordnet ist, dass der Energiespeicher-Schwerpunkt (32) in Längsrichtung (x) gesehen hinter dem oberen Handgriff (20) angeordnet ist.

15. Heckenschere nach einem der Ansprüche 1 bis 14, **dadurch gekennzeichnet, dass** der Energiespeicher (18) an dem Gehäuse (12) in Längsrichtung (x) gesehen insgesamt hinter dem oberen Handgriff (20) angeordnet ist.

16. Heckenschere nach einem der Ansprüche 1 bis 15, **dadurch gekennzeichnet, dass** der obere Handgriff (20) über wenigstens einen zu dem oberen Handgriff (20) abgewinkelten Griffsteg (26) mit dem Gehäuse (12) verbunden ist, wobei der Griffsteg (26) an dem Gehäuse (12) an einem Bereich unterhalb des Heckenscheren-Schwerpunktes (30) angreift.

17. Heckenschere nach einem der Ansprüche 1 bis 16, **dadurch gekennzeichnet, dass** eine Griffachse (G) des hinteren Handgriffes (24) im Bereich von -30° bis +30° in Bezug auf die Längsachse (L) ausgerichtet ist.

18. Heckenschere nach einem der Ansprüche 1 bis 17, **dadurch gekennzeichnet, dass** der hintere Handgriff (24") an dem Gehäuse (12) um eine Schwenkachse (54) verschwenkbar gelagert ist, die quer zur Längsachse (L) ausgerichtet ist.

19. Heckenschere nach einem der Ansprüche 1 bis 18, **dadurch gekennzeichnet,dass** der hintere Handgriff (24"') an dem Gehäuse (12) um eine Achse verdrehbar gelagert ist, die im Wesentlichen parallel zu der Längsachse (L) oder der zugehörigen Griffachse ausgerichtet ist.

20. Heckenschere nach einem der Ansprüche 1 bis 19, **dadurch gekennzeichnet, dass** der Antriebsmotor (16) und der Energiespeicher (18) an dem Gehäuse (12) so angeordnet sind, dass die Heckenschere (10), wenn sie an dem oberen Handgriff (20) frei gehalten ist, eine Gleichgewichtslage einnimmt, bei der die Längsachse (L) mit der Horizontalen einen Gleichgewichtswinkel a im Bereich von -30° ≤ α ≤ +30° einschließt.

21. Heckenschere nach einem der Ansprüche 1 bis 20, **dadurch gekennzeichnet, dass** der Schwerpunkt des Energiespeichers (18) oberhalb des Messerbalkens (14) angeordnet ist.

22. Heckenschere nach Anspruch 21, **dadurch gekennzeichnet, dass** der Energiespeicher (18) vollständig oberhalb des Messerbalkens (14) angeordnet ist.

## Claims

1. Hedge trimmer (10) having a housing (12), on which a blade bar (14) projecting forwards from the housing (12) along a longitudinal axis (L), an electric drive motor (16) for driving the blade bar (14) and at least one electric energy store (18) for supplying the drive motor (16) with electrical energy are mounted, having a top handle (20) arranged above a centre of gravity (30) of the hedge trimmer, and having a rear handle (24) arranged behind the hedge-trimmer centre of gravity (30), wherein the energy store (18) is arranged on the housing (12) at least mainly in front of the rear handle (24), and wherein the energy store (18) is interchangeable, wherein the housing (12) has at least one mechanical and/or electrical interface (48) for at least one energy store, wherein the energy store has an energy-store center of gravity (32),
**characterized in that** the interface (48) on the housing (12) is accessible from above or from the front or from the side, such that an energy store (18) can be connected to the interface (48) essentially from above or from the front of from the side, wherein the energy store (18) is arranged on the housing (12) as viewed in the lateral direction (z) in such a way that the energy-store center of gravity (32) is at a distance of not more than 20 % of the overall width (B) of the housing (12) from a center-of-gravity longitudinal axis (L) which passes through the hedge-trimmer center of gravity (30), wherein the housing (12) for accommodating the energy store (18) has a receptacle (50) in which the interface (48) is arranged and in which the energy store (18) is completely accommodated in the inserted state, such that the energy store, in the inserted state, forms little interference contours.

2. Hedge trimmer according to Claim 1, **characterized in that** the energy store (18) is arranged on the housing (12) in front of the drive motor (16) as viewed in the longitudinal direction (x).

3. Hedge trimmer according to either of Claims 1 and 2, **characterized in that** the energy store (18) is arranged on the housing (12) in an overlapping manner with the drive motor (16) as viewed in the height direction (y).

4. Hedge trimmer according to Claim 3, **characterized in that** the energy store (18) is arranged on the housing (12) at least partly above the drive motor (16).

5. Hedge trimmer according to Claim 3, **characterized in that** the energy store (18) is arranged on the housing (12) at least partly below the drive motor (16).

6. Hedge trimmer according to either of Claims 1 and 2, **characterized in that** the energy store (18A, 18B) is arranged on the housing (12) at least partly in an overlapping manner with the drive motor (16) as viewed in the lateral direction (z).

7. Hedge trimmer according to Claim 6, **characterized in that** the energy store (18A, 18B) is arranged on the housing (12) laterally next to the drive motor (16).

8. Hedge trimmer according to Claim 1, **characterized in that** the energy store (18) is arranged on the housing (12) behind the drive motor (16) as viewed in the longitudinal direction (x).

9. Hedge trimmer according to one of Claims 1 to 8, **characterized in that** the energy store (18) has two sections (18A, 18B) which are arranged approximately symmetrically with respect to the drive motor (16).

10. Hedge trimmer according to one of Claims 1 to 9, **characterized in that** the energy store (18) is arranged on the housing (12) obliquely with respect to the longitudinal axis (L).

11. Hedge trimmer according to one of Claims 1 to 10, **characterized in that** the drive motor (16) has a motor shaft (38) which is arranged obliquely with respect to the longitudinal axis (L).

12. Hedge trimmer according to Claim 11, **characterized in that** the motor shaft (38) is connected to the blade bar (14) via an angular gear unit (40).

13. Hedge trimmer according to one of Claims 1 to 12, **characterized in that** the energy store (18) is arranged on the housing (12) on the whole in front of the rear handle (24) as viewed in the longitudinal direction (x).

14. Hedge trimmer according to one of Claims 1 to 13, **characterized in that** the energy store (18) has an energy-store centre of gravity (32), and **in that** the energy store (18) is arranged on the housing (12) in such a way that the energy-store centre of gravity (32) is arranged behind the top handle (20) as viewed in the longitudinal direction (x).

15. Hedge trimmer according to one of Claims 1 to 14, **characterized in that** the energy store (18) is arranged on the housing (12) on the whole behind the top handle (20) as viewed in the longitudinal direction (x).

16. Hedge trimmer according to one of Claims 1 to 15, **characterized in that** the top handle (20) is connected to the housing (12) via at least one handle web (26) angled relative to the top handle (20), the handle web engaging the housing (12) in a region below the hedge-trimmer centre of gravity (30).

17. Hedge trimmer according to one of Claims 1 to 16, **characterized in that** a handle axis (G) of the rear handle (24) is oriented within the range of -30° to +30° with respect to the longitudinal axis (L).

18. Hedge trimmer according to one of Claims 1 to 17, **characterized in that** the rear handle (24") is pivotably mounted on the housing (12) about a pivot axis (54) which is oriented transversely to the longitudinal axis (L).

19. Hedge trimmer according to one of Claims 1 to 18, **characterized in that** the rear handle (24"') is rotatably mounted on the housing (12) about an axis which is oriented essentially parallel to the longitudinal axis (L) or the associated handle axis.

20. Hedge trimmer according to one of Claims 1 to 19, **characterized in that** the drive motor (16) and the energy store (18) are arranged on the housing (12) in such a way that the hedge trimmer (10), if it is freely held at the top handle (20), assumes a position of equilibrium in which the longitudinal axis (L) encloses an equilibrium angle α within the range of -30° ≤ α ≤ +30° with the horizontal.

21. Hedge trimmer according to one of Claims 1 to 20, **characterized in that** the centre of gravity of the energy storage (18) is arranged above the blade bar (14).

22. Hedge trimmer according to Claim 21, **characterized in that** the energy storage (18) is arranged completely above the blade bar (14).

## Revendications

1. Taille-haie (10) comprenant un boîtier (12), sur lequel sont montés une barre de coupe (14) saillant vers l'avant le long d'un axe longitudinal (L) depuis le boîtier (12), un moteur d'entraînement électrique (16) pour l'entraînement de la barre de coupe (14) et au moins un accumulateur d'énergie électrique (18), pour l'alimentation du moteur d'entraînement (16) en énergie électrique, avec une poignée supérieure (20) disposée au-dessus d'un centre de gravité (30) du taille-haie et avec une poignée arrière (24) disposée derrière le centre de gravité (30) du taille-haie, l'accumulateur d'énergie (18) étant disposé sur le boîtier (12) au moins essentiellement avant la poignée arrière (24) et l'accumulateur d'énergie (18) pouvant être remplacé et le boîtier (12) présentant au moins une interface mécanique et/ou électrique (48) pour au moins un accumulateur d'énergie, qui présente un centre de gravité d'accumulateur d'énergie (32),
**caractérisé en ce que**
l'interface (48) sur le boîtier (12) est accessible par le haut ou par le devant ou depuis le côté de sorte qu'un accumulateur d'énergie (18) puisse être connecté essentiellement par le haut ou par le devant ou depuis le côté à l'interface (48), l'accumulateur d'énergie (18) étant disposé sur le boîtier (12), vu dans la direction latérale (z), de telle sorte que le centre de gravité d'accumulateur d'énergie (32) présente, depuis un axe longitudinal (L) de centre de gravité, qui passe par le centre de gravité du taille-haie (30), une distance (64) ne dépassant pas 20% de la largeur totale (B) du boîtier (12), et le boîtier (12) pour recevoir l'accumulateur d'énergie (18) présentant un compartiment de réception (50) dans lequel est disposée l'interface (48) et dans lequel l'accumulateur d'énergie (18) dans l'état inséré est complètement reçu de telle sorte que l'accumulateur d'énergie, dans l'état inséré, forme moins de contours gênants.

2. Taille-haie selon la revendication 1, **caractérisé en ce que** l'accumulateur d'énergie (18) est disposé sur le boîtier (12), vu dans la direction longitudinale (x), avant le moteur d'entraînement (16).

3. Taille-haie selon l'une quelconque des revendications 1 ou 2, **caractérisé en ce que** l'accumulateur d'énergie (18) est disposé sur le boîtier (12), vu dans la direction verticale (y), de manière à chevaucher le moteur d'entraînement (16).

4. Taille-haie selon la revendication 3, **caractérisé en ce que** l'accumulateur d'énergie (18) est disposé sur le boîtier (12) au moins en partie au-dessus du moteur d'entraînement (16).

5. Taille-haie selon la revendication 3, **caractérisé en ce que** l'accumulateur d'énergie (18) est disposé sur le boîtier (12) au moins en partie en dessous du moteur d'entraînement (16).

6. Taille-haie selon l'une quelconque des revendications 1 ou 2, **caractérisé en ce que** l'accumulateur d'énergie (18A, 18B) est disposé sur le boîtier (12), vu dans la direction latérale (z), de manière à chevaucher au moins en partie le moteur d'entraînement (16).

7. Taille-haie selon la revendication 6, **caractérisé en ce que** l'accumulateur d'énergie (18A, 18B) est disposé sur le boîtier (12) latéralement à côté du moteur d'entraînement (16).

8. Taille-haie selon la revendication 1, **caractérisé en ce que** l'accumulateur d'énergie (18) est disposé sur le boîtier (12), vu dans la direction longitudinale (x), derrière le moteur d'entraînement (16).

9. Taille-haie selon l'une quelconque des revendications 1 à 8, **caractérisé en ce que** l'accumulateur d'énergie (18) présente deux portions (18A, 18B) qui sont disposées approximativement symétriquement par rapport au moteur d'entraînement (16).

10. Taille-haie selon l'une quelconque des revendication 1 à 9, **caractérisé en ce que** l'accumulateur d'énergie (18) est disposé sur le boîtier (12) obliquement par rapport à l'axe longitudinal (L).

11. Taille-haie selon l'une quelconque des revendications 1 à 10, **caractérisé en ce que** le moteur d'entraînement (16) présente un arbre de moteur (38) qui est disposé obliquement par rapport à l'axe longitudinal (L).

12. Taille-haie selon la revendication 11, **caractérisé en ce que** l'arbre de moteur (38) est connecté à la barre de coupe (14) par le biais d'un engrenage angulaire (40).

13. Taille-haie selon l'une quelconque des revendications 1 à 12, **caractérisé en ce que** l'accumulateur d'énergie (18) est disposé sur le boîtier (12), vu dans la direction longitudinale (x), complètement avant la poignée arrière (24).

14. Taille-haie selon l'une quelconque des revendications 1 à 13, **caractérisé en ce que** l'accumulateur d'énergie (18) présente un centre de gravité d'accumulateur d'énergie (32) et **en ce que** l'accumulateur d'énergie (18) est disposé sur le boîtier (12) de telle sorte que le centre de gravité d'accumulateur d'énergie (32) soit disposé, vu dans la direction longitudinale (x), derrière la poignée supérieure (20).

15. Taille-haie selon l'une quelconque des revendications 1 à 14, **caractérisé en ce que** l'accumulateur d'énergie (18) est disposé sur le boîtier (12), vu dans la direction longitudinale (x), complètement derrière la poignée supérieure (20).

16. Taille-haie selon l'une quelconque des revendications 1 à 15, **caractérisé en ce que** la poignée supérieure (20) est connectée au boîtier (12) par le biais d'au moins une anse de préhension (26) coudée par rapport à la poignée supérieure (20), l'anse de préhension (26) venant en prise sur le boîtier (12) au niveau d'une région sous le centre de gravité du taille-haie (30).

17. Taille-haie selon l'une quelconque des revendications 1 à 16, **caractérisé en ce qu'**un axe de préhension (G) de la poignée arrière (24) est orienté par rapport à l'axe longitudinal (L) suivant une plage angulaire de -30° à +30°.

18. Taille-haie selon l'une quelconque des revendications 1 à 17, **caractérisé en ce que** la poignée arrière (24") est montée sur le boîtier (12) de manière à pouvoir pivoter autour d'un axe de pivotement (54), qui est orienté transversalement à l'axe longitudinal (L).

19. Taille-haie selon l'une quelconque des revendications 1 à 18, **caractérisé en ce que** la poignée arrière (24') est montée sur le boîtier (12) de manière à pouvoir tourner autour d'un axe qui est orienté essentiellement parallèlement à l'axe longitudinal (L) ou à l'axe de poignée associé.

20. Taille-haie selon l'une quelconque des revendications 1 à 19, **caractérisé en ce que** le moteur d'entraînement (16) et l'accumulateur d'énergie (18) sont disposés sur le boîtier (12) de telle sorte que le taille-haie (10), lorsqu'il est maintenu librement au niveau de la poignée supérieure (20), adopte une position d'équilibre dans laquelle l'axe longitudinal (L) forme avec l'horizontale un angle d'équilibre α de l'ordre de -30° ≤ α ≤ +30°.

21. Taille-haie selon l'une quelconque des revendications 1 à 20, **caractérisé en ce que** le centre de gravité de l'accumulateur d'énergie (18) est disposé au-dessus de la barre de coupe (14).

22. Taille-haie selon la revendication 21, **caractérisé en ce que** l'accumulateur d'énergie (18) est disposé complètement au-dessus de la barre de coupe (14).
